(19) Europäisches Patentamt
European Patent Office
Office européen des brevets

(11) **EP 3 409 548 A1**

(12) **EUROPEAN PATENT APPLICATION**
published in accordance with Art. 153(4) EPC

(43) Date of publication:
**05.12.2018 Bulletin 2018/49**

(51) Int Cl.:
***B60T 8/1755*** (2006.01)

(21) Application number: **16888049.0**

(22) Date of filing: **29.09.2016**

(86) International application number:
**PCT/JP2016/078914**

(87) International publication number:
**WO 2017/130463 (03.08.2017 Gazette 2017/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **28.01.2016 JP 2016014583**

(71) Applicant: **Advics Co., Ltd.**
**Kariya-shi, Aichi 448-8688 (JP)**

(72) Inventor: **HASHIMOTO, Yosuke**
**Kariya-shi**
**Aichi 448-8688 (JP)**

(74) Representative: **Winter, Brandl, Fürniss, Hübner, Röss, Kaiser, Polte - Partnerschaft mbB**
**Patent- und Rechtsanwaltskanzlei**
**Alois-Steinecker-Strasse 22**
**85354 Freising (DE)**

(54) **VEHICLE DRIVING ASSISTANCE DEVICE**

(57)     Provided is a vehicle driving assistance device with which it is possible to lessen the imbalance in braking force exerted on left and right drive wheels during the vehicle deceleration that accompanies vehicle braking after turning assist control has been executed. This device has an estimation unit for separately estimating the temperatures of the braking portions in the left and right drive wheels, a first execution unit for executing vehicle stabilization control for separately controlling the braking forces exerted on the vehicle wheels, and a second execution unit for executing turning assist control for exerting braking force on the inside drive wheel (fig. 6(d)) of the left and right drive wheels when the vehicle is turning while vehicle stabilization control is not being executed. During turning assist control, the braking force (shown by the solid line from time t12 onward) exerted on the inside drive wheel when the difference (fig. 6(a)) in pad temperatures between the left and right drive wheels is equal to or greater than a reduction determination value J1 is reduced to a greater extent than the braking force (shown by the single-dash line from time t12 onward) exerted on the inside drive wheel when the pad temperature difference is less than the reduction determination value J1.

FIG. 6

(a) PAD TEMPERATURE DIFFERENCE

(b) FEEDFORWARD TERM

(c) FEEDBACK TERM

(d) BRAKING FORCE EXERTED ON INSIDE DRIVE WHEEL (FRONT RIGHT WHEEL FR)

(e) BRAKING FORCE EXERTED ON INSIDE DRIVEN WHEEL (REAR RIGHT WHEEL RR)

**Description**

Technical Field

The invention relates to a vehicle driving assistance device that executes control to exert a braking force on an inside drive wheel during turning of a vehicle.

Background Art

Conventionally, a vehicle control device that executes vehicle stabilization control to separately control a braking force exerted on each vehicle wheel of a vehicle has been known (for example, see PTL 1). In the vehicle stabilization control described in PTL 1, the braking force exerted on each of the vehicle wheels is separately controlled such that a control target value of a yaw rate of the vehicle matches an actual value thereof. In this way, sideslip of the vehicle is prevented.

In addition, when not executing the vehicle stabilization control, the device described in PTL 1 executes turning assist control to exert the braking force on an inside drive wheel (a drive wheel located on the inside in a turning direction of the vehicle) during turning of the vehicle. In this turning assist control, it is possible to increase drive torque distributed to an outside drive wheel by exerting the braking force on the inside drive wheel. Thus, vehicle turning performance is improved.

Citation List

Patent Literature

[PTL 1] JP-A-2015-112983

Disclosure of Invention

Technical Problem

In the above turning assist control, the braking force is only exerted on the inside drive wheel of right and left drive wheels. Accordingly, during execution of the turning assist control, a temperature of a braking portion (for example, a brake pad) in the inside drive wheel is increased while a temperature of a braking portion in the outside drive wheel is not increased. In this way, the temperature differs between the braking portions in the right and left drive wheels.

Here, in the case where the temperature of the above braking portion is increased in conjunction with a braking operation, an amount of the braking force exerted on the vehicle wheel by the braking portion tends to be reduced. Accordingly, for example, in the case where a driver performs the braking operation in a state where a temperature difference between the braking portions in the right and left drive wheels is increased due to the execution of the turning assist control, the exerted amounts of the braking force differ between the right drive wheel and the left drive wheel. That is, the braking forces exerted on the right and left drive wheels become unbalanced.

The invention has been made in view of such circumstances and therefore has a purpose of providing a vehicle driving assistance device capable of lessening imbalance in braking forces exerted on right and left drive wheels during vehicle deceleration that is associated with vehicle braking after execution of turning assist control.

Solution to Problem

In order to solve the above problem, a vehicle driving assistance device has: an estimation unit that separately estimates temperatures of braking portions in right and left drive wheels of a vehicle; a first execution unit that executes vehicle stabilization control to separately control a braking force exerted on each vehicle wheel of the vehicle; a second execution unit that executes turning assist control to increase drive torque distributed to an outside drive wheel of the right and left drive wheels by exerting the braking force on an inside drive wheel during turning of the vehicle in a period in which the vehicle stabilization control is not executed; and a reduction unit that reduces an amount of the braking force exerted on the inside drive wheel to be smaller than the amount of the braking force exerted thereon at the time when a value acquired by subtracting a temperature of the braking portion in the outside drive wheel from a temperature of the braking portion in the inside drive wheel estimated by the estimation unit is less than a reduction determination value in the case where the subtracted value is equal to or greater than the reduction determination value during execution of the turning assist control.

According to the above device, when the value (a temperature difference) acquired by subtracting the temperature of the braking portion in the outside drive wheel from the temperature of the braking portion in the inside drive wheel becomes equal to or greater than the reduction determination value during the execution of the turning assist control, the amount of the braking force on the inside drive wheel is reduced. Thus, it is possible to lessen a temperature increase in the braking portion in the inside drive wheel. That is, the above temperature difference that is generated in conjunction with the execution of the turning assist control is less likely to be increased. Accordingly, in the case where the braking force is exerted on each of the right and left drive wheels to decelerate the vehicle after termination of the turning assist control, the exerted amounts of the braking force are less likely to differ between the right drive wheel and the left drive wheel, and it is thus possible to lessen imbalance in the braking forces exerted on the right and left drive wheels. Therefore, it is possible to lessen the imbalance in the braking forces exerted on the right and left drive wheels during vehicle deceleration that is associated with vehicle braking after the execution of the turning assist control.

In the above driving assistance device, in the case where the subtracted value is equal to or greater than the reduction determination value, the reduction unit preferably increases a degree of a reduction of the braking force exerted on the inside drive wheel as the subtracted value is increased.

According to the above device, when the above temperature difference is equal to or greater than the reduction determination value but remains relatively small, a relatively large amount of the braking force is exerted on the inside drive wheel. Thus, the drive torque that is applied to the outside drive wheel is not significantly reduced. As a result, vehicle turning performance can appropriately be improved by executing the turning assist control. Meanwhile, when the above temperature difference is relatively large, the amount of the braking force exerted on the inside drive wheel is reduced. Thus, it is possible to lessen a temperature increase in the braking portion of the inside drive wheel. Therefore, it is possible to lessen the imbalance in the braking forces exerted on the right and left drive wheels during the vehicle deceleration that is associated with the vehicle braking after the execution of the turning assist control.

In the above driving assistance device, in the case where the subtracted value is equal to or greater than a stop determination value that is greater than the reduction determination value, the reduction unit preferably cancels braking on the inside drive wheel through the turning assist control.

According to the above device, when the temperature difference becomes equal to or greater than the stop determination value, the braking force is no longer exerted on the inside drive wheel. Thus, the temperature of the braking portion in the inside drive wheel is no longer increased. That is, the temperature difference is not increased. Therefore, it is possible to favorably lessen the imbalance in the braking forces exerted on the right and left drive wheels during the vehicle deceleration that is associated with the vehicle braking thereafter.

In the above driving assistance device, the vehicle preferably has the right and left drive wheels and right and left driven wheels, and preferably has an exertion unit that exerts the braking force on the inside driven wheel of the vehicle when the reduction unit reduces the amount of the braking force exerted on the inside drive wheel of the vehicle.

In the above device, when the braking force to be exerted on the inside drive wheel is simply reduced through the turning assist control, the vehicle turning performance is degraded. According to the above device, when the reduction unit reduces the amount of the braking force exerted on the inside drive wheel, the braking force is exerted on the inside driven wheel. In this way, yaw moment that results from a braking force difference between the inside driven wheel and an outside driven wheel is applied to the vehicle. Therefore, according to the above device, even in the case where the temperature difference becomes significant and the amount of the braking force exerted on the inside drive wheel is reduced, it is possible to prevent degradation of the vehicle turning performance.

In the above driving assistance device, a control amount in the turning assist control preferably includes: a feedforward term that is defined on the basis of an index value of acceleration in a lateral direction of the vehicle; and a feedback term that is defined on the basis of an actual value of a yaw rate of the vehicle, the reduction unit preferably and at least partially reduces the feedback term, and the exertion unit preferably exerts the braking force, the amount of which corresponds to a reduction amount of the feedback term by the reduction unit, on the inside driven wheel.

According to the above device, it is possible to accurately compensate for a reduction in a vehicle turning amount that is associated with the reduction in the braking force exerted on the inside drive wheel by exerting the braking force on the inside driven wheel.

Brief Description of Drawings

Fig. 1 is a block diagram of a schematic configuration of a vehicle that includes a control device as a first embodiment of a vehicle driving assistance device.
Fig. 2 is a flowchart of an execution procedure of vehicle stabilization control processing.
Fig. 3 is a flowchart of an execution procedure of turning assist control processing in the control device of the first embodiment.
Fig. 4 is a graph illustrating a relationship between lateral acceleration and a feedforward term.

Fig. 5 is a graph illustrating a relationship between a yaw rate difference and a feedback term.

Fig. 6 is a timing chart illustrating an example of an execution mode of the turning assist control processing in the control device of the first embodiment, in which (a) represents a transition in a pad temperature difference, (b) represents a transition in the feedforward term, (c) represents a transition in the feedback term, (d) represents a transition in a braking force exerted on an inside drive wheel, and (e) represents a transition in the braking force exerted on an inside driven wheel.

Fig. 7 is a flowchart of an execution procedure of turning assist control processing in a control device of a second embodiment.

Fig. 8 is a graph illustrating a relationship between a pad temperature difference and a reflection factor.

Fig. 9 is a timing chart illustrating an example of an execution mode of the turning assist control processing in the control device of the second embodiment, in which (a) represents an exertion condition of a braking force on an inside drive wheel, (b) represents a transition in the pad temperature difference, and (c) represents a transition in the reflection factor.

Description of Embodiments

(First Embodiment)

A description will hereinafter be made on a vehicle driving assistance device of a first embodiment.

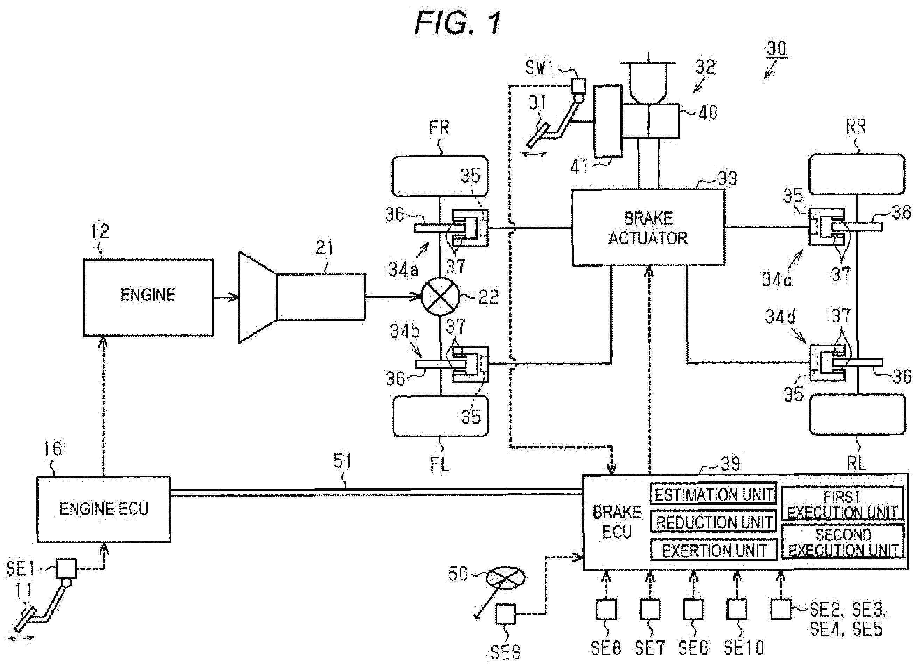

As illustrated in Fig. 1, a vehicle that includes a brake ECU 39 (also referred to as a "brake electronic control device") as an example of the vehicle driving assistance device is a front-wheel drive vehicle that has plural (four in this embodiment) vehicle wheels (a front right wheel FR, a front left wheel FL, a rear right wheel RR, and a rear left wheel RL) . This vehicle includes an engine 12 that generates drive torque corresponding to an operation amount of an accelerator pedal 11 by a driver. The drive torque that is output from the engine 12 is divided and transmitted to the front right and left wheels FR, FL as drive wheels via an automatic transmission 21 and a differential gear 22.

An operation state of the engine 12 is controlled by an engine ECU 16 (also referred to as an "engine electronic control device") that has a CPU, ROM, RAM, and the like. An accelerator operation amount sensor SE1 that detects the operation amount of the accelerator pedal 11 (an accelerator operation amount) by the driver is connected to this engine ECU 16. The engine ECU 16 controls the operation state of the engine 12 on the basis of the accelerator operation amount, which is detected by the accelerator operation amount sensor SE1, and the like.

A vehicle braking system 30 includes: a hydraulic pressure generator 32 that is coupled to a brake pedal 31; and a brake actuator 33. A wheel cylinder 35 in each of brake mechanisms 34a, 34b, 34c, 34d provided in the vehicle wheels FR, FL, RR, RL is connected to a hydraulic circuit in the brake actuator 33. Note that, in addition to the wheel cylinder 35, each of the brake mechanisms 34a to 34d includes: a disc rotor 36 that integrally rotates with corresponding one of the vehicle wheels FR, FL, RR, RL; and a brake pad 37 that is pressed against the disc rotor 36 with a force corresponding to a wheel cylinder pressure that is a hydraulic pressure in the wheel cylinder. In this embodiment, the brake pad 37 corresponds to a braking portion that exerts a braking force on the vehicle wheel.

The hydraulic pressure generator 32 has a master cylinder 40 and a booster 41. The master cylinder 40 generates a master cylinder pressure that is a brake hydraulic pressure corresponding to an operation force reinforced by the booster 41. At this time, brake fluid is supplied from the hydraulic pressure generator 32 to each of the wheel cylinders 35 via the hydraulic circuit in the brake actuator 33. Then, each of the brake mechanisms 34a to 34d exerts the braking force that corresponds to the wheel cylinder pressure in the wheel cylinder 35 on corresponding one of the vehicle wheels FR, FL, RR, RL.

The brake actuator 33 is configured to be able to exert the braking force on each of the vehicle wheels FR, FL, RR, RL even when the driver does not perform a brake operation.

Next, a description will be made on the brake ECU 39 (also referred to as the "brake electronic control device") that controls actuation of the brake actuator 33.

A brake switch SW1 and vehicle wheel speed sensors SE2, SE3, SE4, SE5 are connected to an input-side interface of the brake ECU 39. The brake switch SW1 detects presence or absence of the operation of the brake pedal 31, and each of the vehicle wheel speed sensors SE2, SE3, SE4, SE5 detects a rotational speed of corresponding one of the vehicle wheels FR, FL, RR, RL (a vehicle wheel speed VW) and a vehicle travel speed (a vehicle speed SPD). In addition, a longitudinal acceleration sensor SE6, a lateral acceleration sensor SE7, and a yaw rate sensor SE8 are connected to the input-side interface. The longitudinal acceleration sensor SE6 detects longitudinal acceleration Gf of the vehicle, the lateral acceleration sensor SE7 detects lateral acceleration Gs of the vehicle, and the yaw rate sensor SE8 detects a yaw rate (an actual yaw rate $\gamma$) of the vehicle. Furthermore, a steering angle sensor SE9, an ambient temperature sensor SE10, and the like are connected to the input-side interface. The steering angle sensor SE9 detects a steering angle $\theta$s of a steering wheel 50, and the ambient temperature sensor SE10 detects a temperature of the air on the outside of the vehicle (an ambient temperature Te) . The brake ECU 39 executes various types of arithmetic processing on the basis of detection signals output from the brake switch SW1 and the sensors SE2 to SE10, and controls the brake actuator 33 on the basis of the arithmetic results.

The brake ECU 39 has: a digital computer that is constructed of a CPU, ROM, RAM, and the like; and various driver circuits that actuate various valves and an electric pump motor constituting the brake actuator 33. Various types of control processing, various determination values, and the like are stored in the ROM of the digital computer in advance.

In this embodiment, the ECUs that are mounted on the vehicle and include the engine ECU 16 and the brake ECU 39 are mutually connected via a bus 51 so as to be able to send and receive various types of information and various control commands. For example, the engine ECU 16 appropriately sends information on the accelerator operation amount and the like to the brake ECU 39.

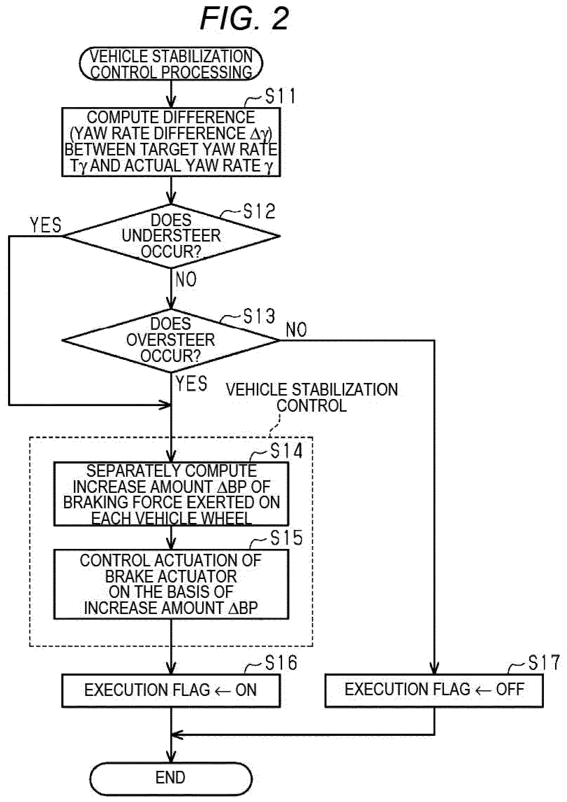

In order to prevent sideslip of the vehicle, the brake ECU 39 executes vehicle stabilization control to separately control the braking force exerted on each of the vehicle wheels FR, FL, RR, RL. Hereinafter, a description will be made on processing that includes such vehicle stabilization control (vehicle stabilization control processing) with reference to Fig. 2.

Fig. 2 is a flowchart of an execution procedure of the vehicle stabilization control processing. The brake ECU 39 executes a series of the processing illustrated in the flowchart as interrupt processing executed at specified intervals.

As illustrated in Fig. 2, in this processing, first, a control target value of the yaw rate (a target yaw rate $T\gamma$) of the vehicle is computed on the basis of the lateral acceleration Gs, and a difference that is acquired by subtracting an actual value of the yaw rate (the actual yaw rate $\gamma$) of the vehicle from the target yaw rate $T\gamma$ ($= T\gamma - \gamma$) is computed as a yaw rate difference $\Delta\gamma$ (step S11).

Next, on the basis of this yaw rate difference $\Delta\gamma$, a determination on presence or absence of occurrence of understeer (step S12) and a determination on presence or absence of occurrence of oversteer (step S13) are made. In detail, if the yaw rate difference $\Delta\gamma$ is equal to or greater than a determination value Ju, it is determined that understeer occurs to the vehicle. Note that, as this determination value Ju, a positive value with which the occurrence of understeer can accurately be determined is computed in advance on the basis of results of various experiments and simulations and is stored in the brake ECU 39. Meanwhile, if the yaw rate difference $\Delta\gamma$ is equal to or less than a determination value Jo that is defined in advance, it is determined that oversteer occurs to the vehicle. Note that, as the determination value Jo, a negative value with which the occurrence of oversteer can accurately be determined is computed in advance on the basis of results of various experiments and simulations and is stored in the brake ECU 39. Furthermore, if the yaw rate difference $\Delta\gamma$ is less than the determination value Ju and is greater than the determination value Jo, it is determined that neither understeer nor oversteer occurs and thus vehicle behavior is stable.

Then, if it is determined that understeer or oversteer occurs to the vehicle, that is, if it is determined that stability of the vehicle behavior is degraded (step S12: YES or step S13: YES), an increase amount $\Delta BP$ of the braking force exerted on each of the vehicle wheels FR, FL, RR, RL is separately computed (step S14). As each of these increase amounts $\Delta BP$, a value with which the above yaw rate difference $\Delta\gamma$ can approximate "0" is set. For example, in the case where understeer occurs to the vehicle during a right turn, the increase amounts $\Delta BP$ are set such that only the braking force exerted on the front right wheel FR of the front right and left wheels FR, FL is increased and that the braking forces exerted on the right and left rear wheels RR, RL are increased equally. In this way, the vehicle can recover from understeer while being decelerated. In the case where oversteer occurs to the vehicle during the right turn, the increase amounts $\Delta BP$ are set such that only the braking force exerted on the front left wheel FL of the front right and left wheels FR, FL is increased and that the braking forces exerted on the right and left rear wheels RR, RL are increased equally. In this way, the vehicle can recover from oversteer while being decelerated.

Thereafter, the actuation of the brake actuator 33 is controlled such that the braking force of each of the vehicle wheels FR, FL, RR, RL is increased by the increase amount $\Delta BP$ (step S15). In this case, an execution flag is operated to be ON (step S16). In regard to this point, in this embodiment, the brake ECU 39 constitutes an example of a first execution unit that executes the vehicle stabilization control to separately control the braking force exerted on each of the vehicle wheels FR, FL, RR, RL of the vehicle.

On the other hand, if it is determined that neither understeer nor oversteer occurs (step S12: NO and step S13: NO), the processing in steps S14 to S16 is skipped. In this case, the execution flag is operated to be OFF (step S17).

Note that, in this embodiment, the processing in step S14 and the processing in step S15 correspond to the vehicle stabilization control. When this vehicle stabilization control is executed, the execution flag is operated to be ON. On the other hand, when the vehicle stabilization control is not executed, the execution flag is operated to be OFF.

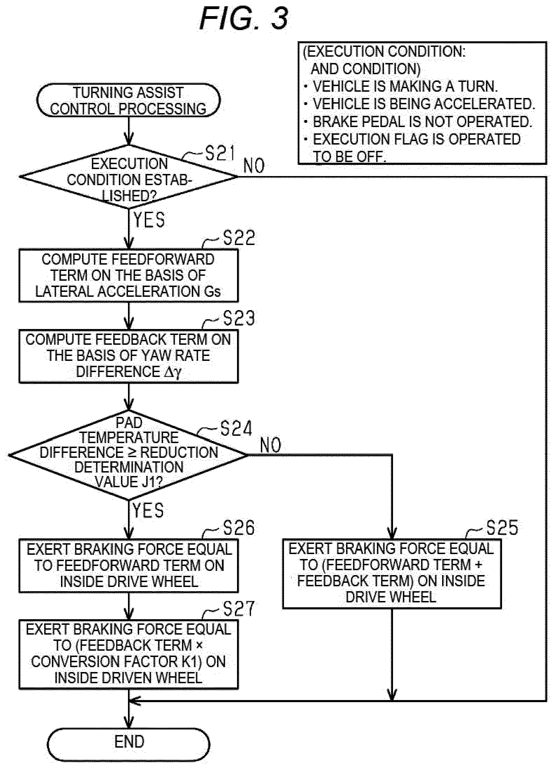

In a period in which the above vehicle stabilization control is not executed, the brake ECU 39 executes turning assist control during turning of the vehicle. In the turning assist control, the drive torque that is distributed to an outside drive wheel of the right and left drive wheels is increased by exerting the braking force on an inside drive wheel. Hereinafter, a description will be made on the turning assist control with reference to Fig. 3.

Fig. 3 is a flowchart of an execution procedure of processing for the turning assist control. The brake ECU 39 executes a series of the processing illustrated in the flowchart as interrupt processing executed at specified intervals.

As illustrated in Fig. 3, in this processing, first, it is determined whether an execution condition is established (step S21). Here, it is determined that the execution condition is established when all of the following conditions are satisfied.

- The vehicle is making a turn.
- The vehicle is being accelerated.
- The brake pedal 31 is not operated (that is, vehicle deceleration associated with vehicle braking does not occur) .
- The execution flag is operated to be OFF.

If the execution condition is not established (step S21: NO), the following processing is not executed, and this processing is terminated once.

On the other hand, if the execution condition is established (step S21: YES), a feedforward term that is a control amount in the turning assist control is computed on the basis of the lateral acceleration Gs (step S22).

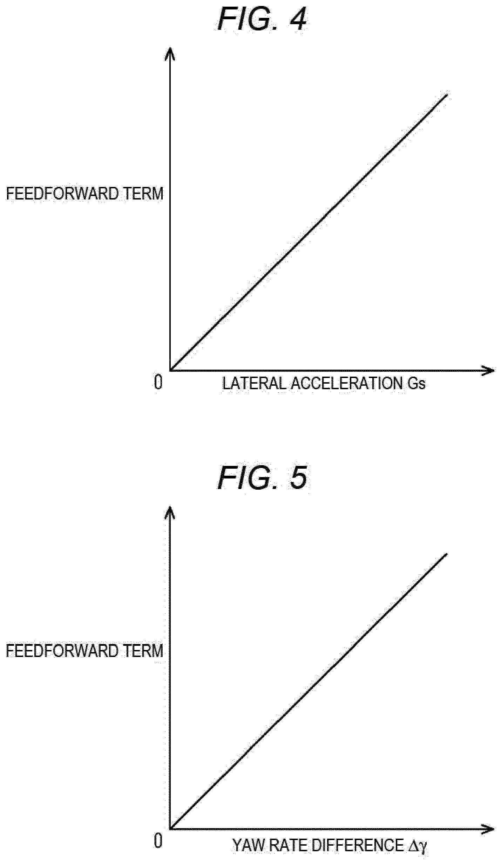

In the case where the driver operates the steering wheel 50, as the steering angle θs of the steering wheel 50 is increased, a vehicle turning amount requested by the driver tends is increased, and the lateral acceleration Gs tends to be increased. Thus, during execution of the turning assist control, it is desired to increase an assist amount in turning of the vehicle (that is, a braking force difference between the right and left drive wheels) as the lateral acceleration Gs is increased. In view of this, in this embodiment, such a relationship between the braking force (the above feedforward term) exerted on the inside drive wheel (the vehicle wheel located on the inside in a vehicle turning direction of the front right and left wheels FR, FL) and the lateral acceleration Gs is computed in advance. This relationship is stored as a map A in the brake ECU 39. In the processing in step S22, the feedforward term is computed from the above map A on the basis of the lateral acceleration Gs. In detail, as illustrated in Fig. 4, as the lateral acceleration Gs is increased, a greater value is computed as the feedforward term, that is, a value with which the braking force exerted on the inside drive wheel is increased is computed. Note that, in this embodiment, the lateral acceleration Gs, which is detected by the lateral acceleration sensor SE7, corresponds to an index value of the acceleration in a lateral direction of the vehicle.

In addition, the yaw rate difference Δγ is computed, and a feedback term that is a control amount in the turning assist control is computed on the basis of the yaw rate difference Δγ (step S23).

In this embodiment, a relationship between the yaw rate difference Δγ and the increase amount of the braking force exerted on the inside drive wheel (the feedback term) is computed in advance. The relationship allows the yaw rate difference Δγ to approximate "0" and is stored as a map B in the brake ECU 39. In the processing in step S23, the feedback term is computed from the above map B on the basis of the yaw rate difference Δγ. In detail, as illustrated in Fig. 5, as the yaw rate difference Δγ is increased, a greater value is computed as the feedback term, that is, a value with which the braking force exerted on the inside drive wheel is increased is computed.

Thereafter, a difference between a temperature estimation value (a pad temperature TH1) of the braking portion (the brake pad 37 in detail) in the inside drive wheel and a temperature estimation value (a pad temperature TH2) of the braking portion in the outside drive wheel (a pad temperature difference = TH1 - TH2) is computed. Then, it is determined whether the pad temperature difference is equal to or greater than a reduction determination value J1 (step S24).

Note that the brake ECU 39 computes the temperature estimation value (the pad temperature) of the braking portion in each of the front right and left wheels FR, FL through processing (computation processing) that is separately executed from this processing at specified intervals. That is, in this embodiment, the brake ECU 39 constitutes an example of an estimation unit that separately estimates the temperature of the braking portion (the brake pad 37) in each of the right and left drive wheels (the front right and left wheels FR, FL) of the vehicle.

In this computation processing, the pad temperatures are computed on the basis of the following idea. When the braking force is exerted on each of the vehicle wheels, an amount of heat generated in the braking portion (in detail, a sliding portion of the brake pad 37) in each of the vehicle wheels per unit time (a heat generation amount) can be estimated on the basis of the vehicle wheel speed VW and the wheel cylinder pressure. Meanwhile, when the braking force is not exerted on each of the vehicle wheels, an amount of heat discharged from the braking portion in each of the vehicle wheels per unit time (a heat discharge amount) can be estimated on the basis of the vehicle speed SPD (an index value of an amount of travel wind) and the ambient temperature Te. According to these points, in the above computation processing, the heat generation amount and the heat discharge amount, just as described, are estimated on the basis of the vehicle wheel speed VW, the wheel cylinder pressure, the vehicle speed SPD, and the ambient temperature Te, and the pad temperature is computed through heat balance calculation of each of the braking portions on the basis of those heat generation amount and heat discharge amount. In the processing in step S24 of the turning assist control, it is identified which one of the front right and left wheels FR, FL is the inside drive wheel on the basis of the steering angle θs, and the above pad temperature difference is computed by subtracting the pad temperature of the outside drive wheel from the pad temperature of inside drive wheel, which are computed through the computation processing.

The above reduction determination value J1 is a constant value with which a possibility of deviation of the vehicle in an advancing direction (the generation of the yaw rate) can accurately be determined in the case where it is assumed that the same amount of the wheel cylinder pressure is applied to the brake mechanism 34a in the front right wheel FR and the brake mechanism 34b in the front left wheel FL of the vehicle in a straight travel state. In this embodiment, such a reduction determination value J1 is computed in advance on the basis of results of various experiments and the like and is stored in the brake ECU 39.

If the pad temperature difference is less than the reduction determination value J1 (step S24: NO), the actuation of the brake actuator 33 is controlled such that the braking force, the amount of which is equal to a value acquired by adding the feedforward term and the feedback term, is exerted on the inside drive wheel (step S25). In regard to this point, in this embodiment, the brake ECU 39 constitutes an example of a second execution unit that executes the turning assist control. In the turning assist control, the drive torque that is distributed to the outside drive wheel of the right and left drive wheels (the front right and left wheels FR, FL) is increased by exerting the braking force on the inside drive wheel during turning of the vehicle in the period in which the vehicle stabilization control is not executed.

On the other hand, if the pad temperature difference is equal to or greater than the reduction determination value J1 (step S24: YES), the actuation of the brake actuator 33 is controlled such that the braking force, the amount of which is equal to the feedforward term, is exerted on the inside drive wheel (step S26). That is, the braking force exerted on the inside drive wheel at the time when the pad temperature difference is equal to or greater than the reduction determination value J1 is reduced to be less than the braking force exerted thereon at the time when the pad temperature difference is less than the reduction determination value J1. In regard to this point, in this embodiment, the brake ECU 39 constitutes an example of a reduction unit.

Then, the actuation of the brake actuator 33 is controlled such that the braking force, the amount of which is equal to a value acquired by multiplying the feedforward term by a conversion factor K1 (here, "0" < K1 < "1.0"), is exerted on an inside driven wheel (the vehicle wheel located on the inside in the vehicle turning direction of the right and left rear wheels RR, RL) (step S27). In regard to this point, in this embodiment, the brake ECU 39 constitutes an example of an exertion unit that exerts the braking force on the inside driven wheel of the vehicle when the braking force exerted on the inside drive wheel is reduced.

In the case where the same amount of the braking force is exerted on the inside rear wheel or the inside front wheel, a degree of the increase in the actual yaw rate $\gamma$ is greater when the braking force is exerted on the inside rear wheel than when the braking force is exerted on the inside front wheel. According to this point, in this embodiment, the conversion factor K1 (the constant value) is computed in advance and is stored in the brake ECU 39. The conversion factor K1 can equalize the degree of the increase in the actual yaw rate $\gamma$ between the case where the braking force, the amount of which corresponds to the feedback term, is exerted on the inside drive wheel and the case where the braking force, the amount of which corresponds to the value acquired by multiplying the feedback term by the conversion factor K1, is exerted on the inside driven wheel.

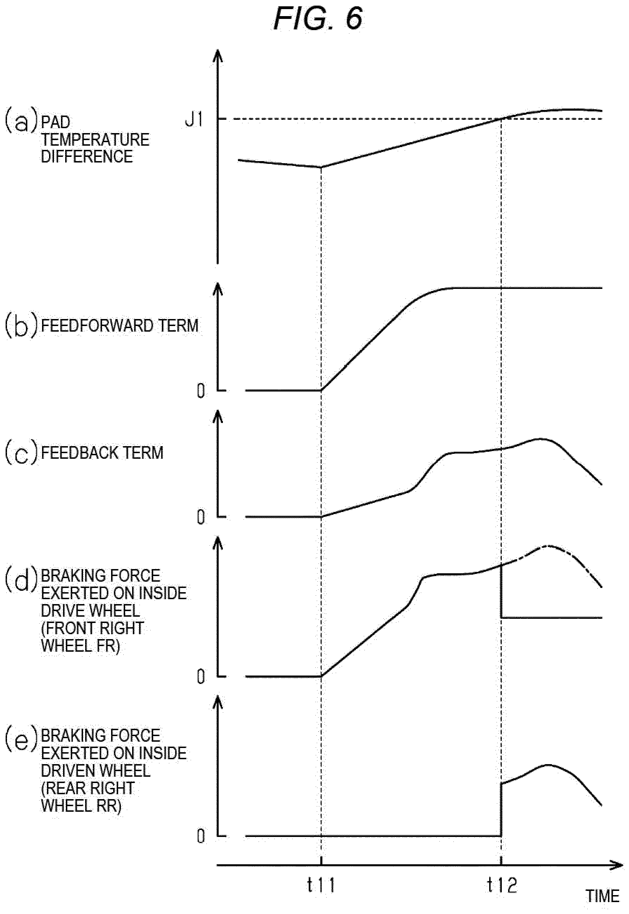

Hereinafter, a description will be made on operation effects exerted through the execution of the turning assist control processing with reference to Fig. 6. Note that the description will herein be made on the case where the vehicle makes the right turn as an example.

In the case where the vehicle makes the right turn and is accelerated and the lateral acceleration Gs is generated in the period in which the vehicle stabilization control is not executed (time t11 in Fig. 6), the computation of the feedforward term (Fig. 6(b)) and the computation of the feedback term (Fig. 6(c)) in the turning assist control are initiated.

In this example, the pad temperature difference (Fig. 6(a)) is less than the reduction determination value J1 at this time. Thus, as illustrated in Fig. 6(d), the braking force, the amount of which is equal to the value acquired by adding the feedforward term and the feedback term, is exerted on the inside drive wheel (the front right wheel FR in this example). As illustrated in Fig. 6(e), the braking force is not exerted on the inside driven wheel (the rear right wheel RR in this example) at this time.

As described above, in the turning assist control, when the pad temperature difference is small, the braking force is only exerted on the front right wheel FR of the right and left front wheels FR, FL, and the drive torque of the engine 12 that is distributed to the front left wheel FL via the differential gear 22 (see Fig. 1) is increased. Thus, compared to the case where the braking force is not exerted on the right and left front wheels FR, FL, vehicle turning performance is improved.

In the case where the pad temperature difference is less than the reduction determination value J1, there is a low possibility that the braking forces exerted on the front right and left wheels FR, FL become unbalanced even in a situation where the execution of the turning assist control is stopped and the same amount of the wheel cylinder pressure is applied to the brake mechanism 34a in the front right wheel FR and the brake mechanism 34b in the front left wheel FL. According to this, in the turning assist control of this embodiment, the braking force exerted on the front right wheel FR is not reduced, and the braking force, the amount of which is equal to the value acquired by adding the feedforward term and the feedback term, is exerted on the front right wheel FR. In this way, the drive torque of the engine 12 that is distributed to the front left wheel FL can sufficiently be increased. Thus, the vehicle turning performance can appropriately be improved. Note that, in this specification, a vehicle driving state under a situation where neither the turning assist control nor the vehicle stabilization control is executed will also be referred to as a "normal driving state".

At the time t11 onward, while the pad temperature of the front right wheel FR is gradually increased due to the exertion of the braking force on the front right wheel FR, the pad temperature of the front left wheel FL is not increased due to the lack of the braking force exerted on the front left wheel FL. Thus, the pad temperature difference is gradually increased.

Then, when the pad temperature difference becomes equal to or greater than the reduction determination value J1 at time t12, the braking force, the amount of which is equal to the feedforward term, is exerted on the front right wheel FR. That is, the braking force exerted on the front right wheel FR at this time (indicated by a solid line in Fig. 6(d)) is reduced to be less than the braking force exerted on the front right wheel FR at the time when the pad temperature difference is less than the reduction determination value J1 (indicated by a single-dash line in Fig. 6(d)).

In the cases where the temperature difference between the braking portions in the front right and left wheels FR, FL falls within a specified range and the vehicle is thereafter brought into the normal driving state and enters a situation where the same amount of the wheel cylinder pressure is applied to the brake mechanism 34a in the front right wheel FR and the brake mechanism 34b in the front left wheel FL, there is an extremely low possibility that the braking forces exerted on the front right and left wheels FR, FL become unbalanced. In this embodiment, when there is a possibility that the temperature difference between the braking portions in the front right and left wheels FR, FL exceeds an upper limit of the above specified range, the braking force that causes the heat generation in the braking portion of the front right wheel FR is partially distributed to the rear right wheel RR. In this way, it is possible to lessen the increase in the temperature difference between the braking portions in the front right and left wheels FR, FL by lessening a temperature increase in the braking portion of the front right wheel FR, and thus the temperature difference can fall within the specified range. Accordingly, when the vehicle is thereafter brought into the normal driving state, it is possible to lessen the imbalance in the braking forces exerted on the front right and left wheels FR, FL during the vehicle deceleration that is associated with the brake operation by the driver.

At the time t12 onward, the braking force, the amount of which is equal to the value acquired by multiplying the feedback term by the conversion factor K1, is exerted on the rear right wheel RR.

In the turning assist control, in the cases where the pad temperature difference is large and the braking force exerted on the front right wheel FR is simply reduced, the vehicle turning performance is degraded. In the turning assist control of this embodiment, when the braking force exerted on the front right wheel FR is reduced, the braking force is exerted on the rear right wheel RR. Thus, the yaw moment that results from the braking force difference between the rear right wheel RR and the rear left wheel RL is generated in the vehicle. Therefore, even when the braking force exerted on the front right wheel FR is reduced due to the large pad temperature difference, it is possible to prevent the degradation of the vehicle turning performance that is associated with such a reduction.

At this time, the braking force, the amount of which corresponds to a reduction amount of the braking force exerted on the front right wheel FR (more specifically, the feedback term), is exerted on the rear right wheel RR. In this way, it is possible to accurately compensate for a reduction in the vehicle turning amount that is associated with the reduction in the braking force exerted on the front right wheel FR by exerting the braking force on the rear right wheel RR.

(Second Embodiment)

Hereinafter, a description will be made on a vehicle driving assistance device in a second embodiment and will be centered on a difference from the vehicle driving assistance device in the first embodiment.

This embodiment differs from the first embodiment in terms of the execution procedure of the turning assist control processing. A description will hereinafter be made on an execution procedure of the turning assist control processing in this embodiment. Note that the same components as those in the first embodiment will hereinafter be denoted by the same reference signs and the detailed description thereon will not be made.

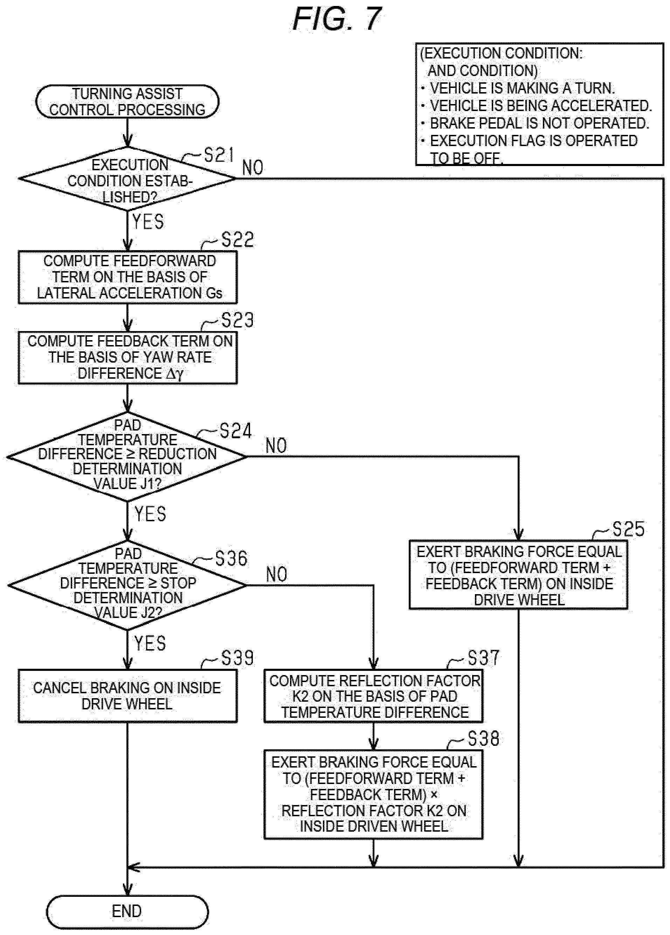

Fig. 7 is a flowchart of the execution procedure of the turning assist control processing. The brake ECU 39 executes a series of the processing illustrated in the flowchart as interrupt processing executed at specified intervals.

As illustrated in Fig. 7, in this processing, under a condition that the execution condition is established (step S21: YES), the feedforward term is computed on the basis of the lateral acceleration Gs (step S22), and the feedback term is computed on the basis of the yaw rate difference $\Delta\gamma$ (step S23).

Then, if the pad temperature difference is less than the reduction determination value J1 (step S24: NO), the actuation of the brake actuator 33 is controlled such that the braking force, the amount of which is equal to the value acquired by adding the feedforward term and the feedback term, is exerted on the inside drive wheel (step S25).

On the other hand, if the pad temperature difference is equal to or greater than the reduction determination value J1 (step S24: YES), it is determined whether the pad temperature difference is equal to or greater than a stop determination value J2 (step S36). Note that the stop determination value J2 is a greater value than the reduction determination value J1 and is a constant value used to determine that there is a high possibility of the driver receiving a sense of discomfort from the deviation of the vehicle that occurs when it is assumed that the same amount of the wheel cylinder pressure is applied to the brake mechanism 34a in the front right wheel FR and the brake mechanism 34b in the front left wheel FL. In this embodiment, such a stop determination value J2 is computed in advance on the basis of results of various experiments and the like and is stored in the brake ECU 39.

If the pad temperature difference is less than the pad temperature difference J2 (step S36: NO), a reflection factor K2 is computed on the basis of the pad temperature difference (step S37). Thereafter, the actuation of the brake actuator 33 is controlled such that the braking force, the amount of which is equal to a value acquired by multiplying a sum of the feedforward term and the feedback term by the reflection factor K2, is exerted on the inside drive wheel (step S38).

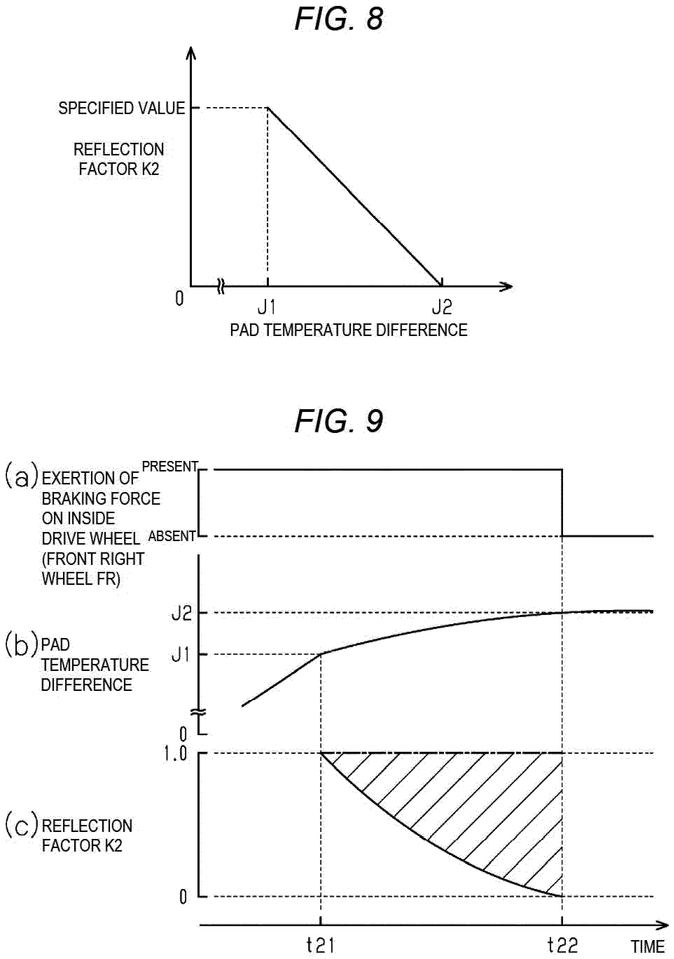

As illustrated in Fig. 8, the reflection factor K2 is a value that is gradually reduced as the pad temperature difference is increased. When the pad temperature difference is the reduction determination value J1, the reflection factor K2 is a specified value that is slightly less than "1.0". When the pad temperature difference is the stop determination value J2, the reflection factor K2 is "0".

On the other hand, if the pad temperature difference is equal to or greater than the stop determination value J2 (step S36 in Fig. 7: YES), braking on the inside drive wheel through the turning assist control is cancelled (step S39). More specifically, the brake ECU 39 outputs a control command value, with which the braking force exerted on the inside drive wheel through the turning assist control can be set to "0", to the brake actuator 33, and the actuation of the brake actuator 33 is controlled on the basis of the control command value.

Hereinafter, a description will be made on operation effects exerted through the execution of the turning assist control processing in this embodiment with reference to Fig. 9. Note that the description will herein be made on the case where the vehicle makes the right turn as an example.

When the pad temperature difference (Fig. 9(b)) is less than the reduction determination value J1 (prior to time t21) during the execution of the turning assist control, the reflection factor K2 (Fig. 9(c)) is not computed, and the braking force, the amount of which is equal to the value acquired by adding the feedforward term and the feedback term, is exerted on the inside drive wheel (the front right wheel FR in this example) (Fig. 9(a)). Prior to the time t21, while the pad temperature of the front right wheel FR is gradually increased due to the exertion of the braking force on the front right wheel FR, the pad temperature of the front left wheel FL is not increased due to the lack of the braking force exerted on the front left wheel FL. Thus, the pad temperature difference is gradually increased.

At the time t21, the pad temperature difference becomes equal to or greater than the reduction determination value J1, and the reflection factor K2 is computed at the time onward. In the turning assist control, the braking force, the amount of which is equal to the value acquired by multiplying the sum of the feedforward term and the feedback term by the reflection factor K2, is exerted on the front right wheel FR. In this way, the braking force exerted on the front right wheel FR is reduced to be less than the braking force exerted thereon at the time when the pad temperature difference is less than the reduction determination value J1 (prior to the time t21), that is, the value acquired by adding the feedforward term and the feedback term. Note that, in a control structure of the turning assist control in this embodiment, if the reflection factor K2 becomes "1.0", the braking force exerted on the inside drive wheel is no longer reduced. From what is just as described, the reduction amount of the braking force exerted on the inside drive wheel is an amount that corresponds to an area of a portion (a hatched portion in Fig. 9) defined by the reflection factor K2 indicated by a solid line in Fig. 9 and a line on which the reflection factor K2 indicated by a single-dash line in Fig. 9 is "1.0".

As described above, in this embodiment, when there is the possibility that the temperature difference between the braking portions in the front right and left wheels FR, FL exceeds the upper limit of the specified range, the braking force that causes the heat generation in the braking portion of the front right wheel FR is partially reduced. In this way, it is possible to lessen the increase in the temperature difference between the braking portions in the front right and left wheels FR, FL by lessening the temperature increase in the braking portion of the front right wheel FR, and thus the temperature difference can fall within the above specified range.

Here, in the above vehicle, as the pad temperature difference is increased, the braking forces exerted on the right and left drive wheels during the normal driving is more likely to become unbalanced. When the degree of the reduction in the braking force exerted on the inside drive wheel is increased in the turning assist control so as to reliably lessen such imbalance in the braking forces, the improvement in the vehicle turning performance is hindered by the degree of the reduction.

At the time t21 onward in this example, as the pad temperature difference is gradually increased, the reflection factor K2 acquires a smaller value.

Accordingly, in the case where the pad temperature difference is relatively small immediately after the pad temperature difference becomes equal to or greater than the reduction determination value J1, it is considered there is a low possibility that the braking forces on the front right and left wheels FR, FL become unbalanced. Thus, it is possible to lower the degree of the reduction in the braking force exerted on the front right wheel FR by setting the reflection factor K2 to a large value. In this case, while the imbalance in the braking forces exerted on the front right and left wheels FR, FL is lessened, the vehicle turning performance can favorably be improved through the turning assist control.

In the case where the pad temperature difference is further increased after the pad temperature difference becomes equal to or greater than the reduction determination value J1, it is considered there is a high possibility that the braking forces on the front right and left wheels FR, FL become unbalanced. Thus, it is possible to increase the degree of the reduction in the braking force exerted on the front right wheel FR by setting the reflection factor K2 to a small value. In this way, in the normal driving state after the execution of the turning assist control, it is possible to appropriately lessen the imbalance in the braking forces exerted on the front right and left wheels FR, FL during the vehicle deceleration that is associated with the brake operation by the driver.

As described above, according to this embodiment, it is possible to appropriately lessen the imbalance in the braking forces exerted on the right and left drive wheels in accordance with the above pad temperature difference. In addition, it is possible to set the degree of the reduction in the braking force exerted on the inside drive wheel (more specifically, the reflection factor K2) in a mode capable of improving the vehicle turning performance through the execution of the turning assist control.

When the pad temperature difference thereafter becomes equal to or greater than the stop determination value J2 at time t22, the reflection factor K2 is no longer computed, and braking on the front right wheel FR through the turning assist control is cancelled. According to this embodiment, in the case where the pad temperature difference becomes significant and thus the possibility of the imbalance in the braking forces of the right and left front wheels FR, FL during normal travel becomes high, the exertion of the braking force on the front right wheel FR through the turning assist control is stopped. In this way, it is possible to favorably lessen the temperature increase in the braking portion of the front right wheel FR. Therefore, it is possible to favorably lessen the imbalance in the braking forces of the right and left front wheels FR, FL during the normal travel.

(Other Embodiments)

Each of the above embodiments may be modified and implemented as follows.

- In the first embodiment, when the pad temperature difference is equal to or greater than the reduction determination value J1, the reduction amount of the braking force exerted on the inside drive wheel and the braking force exerted on the inside driven wheel can arbitrarily be changed. For example, in the cases where the feedforward term is set as an "F/F term", the feedback term is set as an "F/B term", and a constant value that is greater than "0" and less than "1.0" is set as a "specified value K3", the braking force, the amount of which is equal to to a value A1 computed by the following relational expression (1), may be exerted on the inside drive wheel. In addition, the braking force, the amount of which is equal to a value A2 computed by the following relational expression (2), can be exerted on the inside driven wheel.

$$\text{Value A1} = (\text{F/F term} + \text{F/B term}) \times \text{K3} \dots (1)$$

$$\text{Value A2} = (\text{F/F term} + \text{F/B term}) \times (1.0 - \text{K3}) \times \text{conversion factor K1} \dots (2)$$

In addition to the above, the braking force, the amount of which is equal to a value A3 computed by the following relational expression (3), may be exerted on the inside drive wheel, and the braking force, the amount of which is equal to a value A4 computed by the following relational expression (4), may be exerted on the inside driven wheel.

$$\text{Value A3} = \text{F/F term} + \text{F/B term} \times \text{K3} \dots (3)$$

$$\text{Value A4} = \text{F/B term} \times (1.0 - \text{K3}) \times \text{conversion factor K1} \dots (4)$$

- In the first embodiment, when the pad temperature difference is equal to or greater than the reduction determination value J1, the reduction amount of the braking force exerted on the inside drive wheel and the braking force exerted on the inside driven wheel may be set in accordance with the pad temperature difference. For example, on the basis of the reflection factor K2 (see Fig. 8), a value A5 that is computed by the following relational expression (5) can be set as the reduction amount of the braking force exerted on the inside drive wheel, and a value A6 that is computed by the following relational expression (6) can be set as the braking force exerted on the inside driven wheel.

$$\text{Value A5 = F/B term} \times \text{reflection factor K2 ... (5)}$$

$$\text{Value A6 = F/B term} \times \text{reflection factor K2} \times \text{conversion factor K1 ... (6)}$$

• In the second embodiment, when the pad temperature difference is equal to or greater than the reduction determination value J1 and is less than the stop determination value J2, the degree of the reduction in the braking force exerted on the inside drive wheel may be set to be constant regardless of the pad temperature difference. For example, on the basis of the specified value K3, the braking force, the amount of which is equal to a value A7 computed by the following relational expression (7), or the braking force, the amount of which is equal to a value A8 computed by the following relational expression (8), can be exerted on the inside drive wheel.

$$\text{Value A7 = (F/F term + F/B term)} \times \text{K3 ... (7)}$$

$$\text{Value A8 = F/F term + (F/B term} \times \text{K3) ... (8)}$$

• In the second embodiment, in the case where the pad temperature difference is equal to or greater than the reduction determination value J1 and the amount of the braking force exerted on the inside drive wheel is reduced, the braking force, the amount of which corresponds to the reduction amount of the braking force on the inside drive wheel, may be exerted on the inside driven wheel. In this case, as the pad temperature difference is gradually increased and the reduction amount of the braking force on the inside drive wheel is thereby increased, the braking force on the inside driven wheel is gradually increased. According to this configuration, even when the braking force on the inside drive wheel is reduced and the drive torque that is transmitted to an outside driven wheel is less likely to be increased, the yaw moment that results from the braking force difference between the inside driven wheel and the outside driven wheel is applied to the vehicle. Therefore, the vehicle can appropriately be assisted for turning while the increase in the pad temperature difference between the right and left drive wheels is lessened.

Note that, in this case, even when the pad temperature difference becomes equal to or greater than the stop determination value J2 and the exertion of the braking force on the inside drive wheel is stopped, the braking force is continuously exerted on the outside driven wheel. Thus, the vehicle can continuously be assisted for turning.

• In the second embodiment, once the pad temperature difference becomes equal to or greater then the stop determination value J2 and the exertion of the braking force on the inside drive wheel by the turning assist control is stopped, the exertion of the braking force on the inside drive wheel may be inhibited even when the pad temperature difference thereafter becomes less than the stop determination value J2 in a period when the execution condition remains established. According to such a configuration, it is possible to avoid the repeated temperature increase in the braking portion of the inside drive wheel, which results from the re-exertion of the braking force on the inside drive wheel. Therefore, it is possible to reliably lessen the imbalance in the braking forces of the right and left drive wheels.
• In the second embodiment, in the cases where the pad temperature difference becomes equal to or greater then the stop determination value J2, the exertion of the braking force on the inside drive wheel by the turning assist control is stopped, and the execution condition remains established thereafter, the braking force may be exerted on the inside drive wheel again under such a condition that the pad temperature difference becomes equal to or less than a return determination value J3 (here, J3 < J2). According to such a configuration, it is possible to prevent occurrence of such a phenomenon (a so-called hunting phenomenon) that switching between the execution of the braking force on the inside drive wheel and the stop of the execution thereof is frequently repeated in a short time due to the transition of the pad temperature difference near the stop determination value J2. In this way, the vehicle driving state can be stabilized.
• In each of the embodiments, the control target value of the yaw rate may be computed on the basis of the steering angle θs. In this case, the steering angle θs that is detected by the steering angle sensor SE9 corresponds to the index value of the acceleration in the lateral direction of the vehicle.

- The control device in each of the embodiments can also be applied to a rear-wheel drive vehicle in which the front wheels FR, FL function as the driven wheels and the rear wheels RR, RL function as the drive wheels.
- The control device in each of the embodiments can also be applied to a four-wheel drive vehicle in which all of the front wheels FR, FL and the rear wheels RR, RL function as the drive wheels. In this case, either one of the inside front wheel and the inside rear wheel may be set as a vehicle wheel on which the braking force is exerted in the turning assist control and as a target vehicle wheel, the braking force on which is reduced when the pad temperature difference is equal to or greater than the reduction determination value J1. In addition, in the case where one of the inside front wheel and the inside rear wheel is set as the vehicle wheel, on which the braking force is exerted in the turning assist control, and as the target vehicle wheel, the braking force on which is reduced when the pad temperature difference is equal to or greater than the reduction determination value J1, the other one of the inside front wheel and the inside rear wheel can be set as a target vehicle wheel, on which the braking force corresponding to the reduction amount of the braking force is exerted.
- In each of the embodiments, the method of estimating the pad temperature of each of the vehicle wheels can arbitrary be changed.
- In each of the embodiments, it is possible to arbitrary change the control structure of the turning assist control. For example, only the feedforward term (or the feedback term) is computed as the control amount of the turning assist control, and the braking force, the amount of which is equal to the feedforward term (or the feedback term), is exerted on the inside drive wheel. In summary, when the pad temperature difference becomes equal to or greater than the reduction determination value J1, it is only required to partially reduce the braking force exerted on the inside drive wheel or to distribute at least some of the reduction amount to the inside driven wheel.
- The control device in each of the embodiments can also be applied to a vehicle on which an electrically-driven braking system is mounted. The electrically-driven braking system drives the brake pads 37 by using an electrically-driven actuator (for example, a motor) and presses the brake pads 37 against the disc rotors 36.

**Claims**

1. A vehicle driving assistance device comprising:

   an estimation unit that separately estimates temperatures of braking portions in right and left drive wheels of a vehicle;
   a first execution unit that executes vehicle stabilization control to separately control a braking force to be exerted on each vehicle wheel of the vehicle;
   a second execution unit that executes turning assist control to increase drive torque distributed to an outside drive wheel by exerting the braking force on an inside drive wheel of the right and left drive wheels during turning of the vehicle in a period in which the vehicle stabilization control is not executed; and
   a reduction unit that reduces an amount of the braking force exerted on the inside drive wheel to be less than the amount of the braking force exerted thereon at the time when a value acquired by subtracting a temperature of the braking portion in the outside drive wheel from a temperature of the braking portion in the inside drive wheel estimated by the estimation unit is less than a reduction determination value in the case where the subtracted value is equal to or greater than the reduction determination value during execution of the turning assist control.

2. The vehicle driving assistance device according to claim 1, wherein
   in the case where the subtracted value is equal to or greater than the reduction determination value, the reduction unit increases a degree of a reduction in the braking force exerted on the inside drive wheel as the subtracted value is increased.

3. The vehicle driving assistance device according to claim 1 or 2, wherein
   in the case where the subtracted value is equal to or greater than a stop determination value that is greater than the reduction determination value, the reduction unit cancels braking on the inside drive wheel through the turning assist control.

4. The vehicle driving assistance device according to any one of claims 1 to 3, wherein
   the vehicle has the right and left drive wheels and right and left driven wheels, and
   has an exertion unit that exerts the braking force on the inside driven wheel when the reduction unit reduces the amount of the braking force exerted on the inside drive wheel of the vehicle.

5. The vehicle driving assistance device according to claim 4, wherein
a control amount in the turning assist control includes: a feedforward term that is defined on the basis of an index value of acceleration in a lateral direction of the vehicle; and a feedback term that is defined on the basis of an actual value of a yaw rate of the vehicle,
the reduction unit at least partially reduces the feedback term, and
the exertion unit exerts the braking force, the amount of which corresponds to a reduction amount of the feedback term by the reduction unit, on the inside driven wheel.

## FIG. 1

## FIG. 2

```
        ┌──────────────────────────┐
        │  VEHICLE STABILIZATION   │
        │   CONTROL PROCESSING     │
        └────────────┬─────────────┘
                     │                    S11
        ┌────────────▼─────────────┐
        │   COMPUTE DIFFERENCE     │
        │ (YAW RATE DIFFERENCE Δγ) │
        │ BETWEEN TARGET YAW RATE  │
        │  Tγ AND ACTUAL YAW RATE γ│
        └────────────┬─────────────┘
                     │                    S12
              ╱──────▼──────╲
     YES    ╱     DOES       ╲
    ◄──────╱   UNDERSTEER     ╲
           ╲     OCCUR?       ╱
            ╲────────┬───────╱
                     │ NO
                     │                    S13
              ╱──────▼──────╲       NO
            ╱     DOES        ╲──────────────┐
            ╲   OVERSTEER     ╱               │
             ╲    OCCUR?     ╱                │
              ╲──────┬──────╱                 │
                     │ YES                    │
                     │                        │
```

VEHICLE STABILIZATION CONTROL

S14 — SEPARATELY COMPUTE INCREASE AMOUNT ΔBP OF BRAKING FORCE EXERTED ON EACH VEHICLE WHEEL

S15 — CONTROL ACTUATION OF BRAKE ACTUATOR ON THE BASIS OF INCREASE AMOUNT ΔBP

S16 — EXECUTION FLAG ← ON

S17 — EXECUTION FLAG ← OFF

END

## FIG. 3

(EXECUTION CONDITION:
  AND CONDITION)
· VEHICLE IS MAKING A TURN.
· VEHICLE IS BEING ACCELERATED.
· BRAKE PEDAL IS NOT OPERATED.
· EXECUTION FLAG IS OPERATED
  TO BE OFF.

```
        ┌─────────────────────┐
        │   TURNING ASSIST     │
        │ CONTROL PROCESSING   │
        └──────────┬──────────┘
                   │
                   ▼          S21
              ╱EXECUTION╲         NO
             ╱ CONDITION ESTAB-╲ ─────────────────┐
             ╲   LISHED?      ╱                    │
              ╲─────┬───────╱                      │
                 YES│                              │
                    ▼          S22                 │
        ┌─────────────────────┐                    │
        │  COMPUTE FEEDFORWARD │                    │
        │  TERM ON THE BASIS OF│                    │
        │ LATERAL ACCELERATION Gs│                  │
        └──────────┬──────────┘                    │
                   │            S23                 │
        ┌─────────────────────┐                    │
        │ COMPUTE FEEDBACK TERM ON│                 │
        │   THE BASIS OF YAW RATE │                 │
        │    DIFFERENCE Δγ     │                    │
        └──────────┬──────────┘                    │
                   │                                │
                   ▼          S24                   │
              ╱   PAD    ╲                          │
             ╱ TEMPERATURE ╲      NO                │
            ╱ DIFFERENCE ≥ REDUCTION╲ ─────┐        │
            ╲  DETERMINATION      ╱        │        │
             ╲   VALUE J1?     ╱           │        │
              ╲─────┬───────╱              │        │
                 YES│                      │        │
                    ▼        S26           ▼  S25   │
        ┌─────────────────────┐  ┌─────────────────────┐
        │ EXERT BRAKING FORCE EQUAL│ │EXERT BRAKING FORCE EQUAL│
        │ TO FEEDFORWARD TERM ON  │ │ TO (FEEDFORWARD TERM + │
        │   INSIDE DRIVE WHEEL    │ │ FEEDBACK TERM) ON INSIDE│
        └──────────┬──────────┘  │     DRIVE WHEEL      │
                   │        S27   └──────────┬──────────┘
        ┌─────────────────────┐             │
        │ EXERT BRAKING FORCE EQUAL│          │
        │  TO (FEEDBACK TERM ×    │          │
        │ CONVERSION FACTOR K1) ON│          │
        │   INSIDE DRIVEN WHEEL   │          │
        └──────────┬──────────┘             │
                   │◄─────────────────────────┘
                   ▼
              ┌─────────┐
              │   END   │
              └─────────┘
```

*FIG. 4*

*FIG. 5*

## FIG. 6

(a) PAD TEMPERATURE DIFFERENCE

J1

(b) FEEDFORWARD TERM

0

(c) FEEDBACK TERM

0

(d) BRAKING FORCE EXERTED ON INSIDE DRIVE WHEEL (FRONT RIGHT WHEEL FR)

0

(e) BRAKING FORCE EXERTED ON INSIDE DRIVEN WHEEL (REAR RIGHT WHEEL RR)

0

t11          t12          TIME

## FIG. 7

(EXECUTION CONDITION:
 AND CONDITION)
· VEHICLE IS MAKING A TURN.
· VEHICLE IS BEING ACCELERATED.
· BRAKE PEDAL IS NOT OPERATED.
· EXECUTION FLAG IS OPERATED
  TO BE OFF.

TURNING ASSIST
CONTROL PROCESSING

S21 — EXECUTION CONDITION ESTABLISHED? — NO

YES

S22 — COMPUTE FEEDFORWARD TERM ON THE BASIS OF LATERAL ACCELERATION Gs

S23 — COMPUTE FEEDBACK TERM ON THE BASIS OF YAW RATE DIFFERENCE Δγ

S24 — PAD TEMPERATURE DIFFERENCE ≥ REDUCTION DETERMINATION VALUE J1? — NO

YES

S36 — PAD TEMPERATURE DIFFERENCE ≥ STOP DETERMINATION VALUE J2? — NO

YES

S25 — EXERT BRAKING FORCE EQUAL TO (FEEDFORWARD TERM + FEEDBACK TERM) ON INSIDE DRIVE WHEEL

S39 — CANCEL BRAKING ON INSIDE DRIVE WHEEL

S37 — COMPUTE REFLECTION FACTOR K2 ON THE BASIS OF PAD TEMPERATURE DIFFERENCE

S38 — EXERT BRAKING FORCE EQUAL TO (FEEDFORWARD TERM + FEEDBACK TERM) × REFLECTION FACTOR K2 ON INSIDE DRIVEN WHEEL

END

## FIG. 8

## FIG. 9

**EP 3 409 548 A1**

# INTERNATIONAL SEARCH REPORT

| International application No. |
|---|
| PCT/JP2016/078914 |

| A. CLASSIFICATION OF SUBJECT MATTER |
|---|
| *B60T8/1755*(2006.01)i |

According to International Patent Classification (IPC) or to both national classification and IPC

| B. FIELDS SEARCHED |
|---|

Minimum documentation searched (classification system followed by classification symbols)
B60T8/1755

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2016 |
| Kokai Jitsuyo Shinan Koho | 1971–2016 | Toroku Jitsuyo Shinan Koho | 1994–2016 |

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
|---|---|---|
| Y | JP 2002-219958 A (Toyota Motor Corp.), 06 August 2002 (06.08.2002), paragraphs [0003], [0016] (Family: none) | 1–5 |
| Y | JP 2004-352112 A (Nissan Motor Co., Ltd.), 16 December 2004 (16.12.2004), paragraphs [0006], [0017], [0020] to [0021], [0069] (Family: none) | 1–5 |

☐ Further documents are listed in the continuation of Box C.   ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 21 December 2016 (21.12.16) | 10 January 2017 (10.01.17) |

| Name and mailing address of the ISA/<br>Japan Patent Office<br>3-4-3,Kasumigaseki,Chiyoda-ku,<br>Tokyo 100-8915,Japan | Authorized officer<br><br>Telephone No. |
|---|---|

Form PCT/ISA/210 (second sheet) (January 2015)

21

**EP 3 409 548 A1**

## REFERENCES CITED IN THE DESCRIPTION

**Patent documents cited in the description**

- JP 2015112983 A